# EUROPEAN PATENT APPLICATION

(11) **EP 2 849 493 A1**
(43) Date of publication of application: **18.03.2015**
(21) Application number: 13787469.9
(22) Date of filing: 19.04.2013
(51) Int. Cl.: H04W 36/38

(54) **NETWORK ACCESS METHOD AND DEVICE**

(30) Priority: 08.05.2012 CN 201210140083
(71) Applicant: ZTE Corporation, Shenzhen, Guangdong 518057 (CN)
(72) Inventor: The designation of the inventor has not yet been filed
(74) Representative: Zinkler, Franz
(86) International application number: PCT/CN2013/074451
(87) International publication number: WO 2013/166907

(57) **Abstract**

Disclosed are a method and a device for accessing a network. The method comprises: a network element of a 3GPP access network receives Wireless Local Area Network (WLAN) network information reported by User Equipment (UE); the network element of the 3GPP access network determines a WLAN network to which the UE is allowed to access according to the WLAN network information; the network element of the 3GPP access network indicates the UE to access the WLAN network. Through the present invention, the UE may implement stream division by accessing the proper WLAN network, and user experience is enhanced.

## Description

### Technical Field

The present invention relates to the field of communication, in particular to a method and a device for accessing a network.

### Background

With the continuous evolution of wireless communication technologies and standards, mobile packet business achieves a significant progress, and the data throughout capacity of single User Equipment (UE) is continuously improved. Taking Long Term Evolution (LTE) system for example, which may support data transmission under the maximum downstream rate of 100Mbps within a 20M bandwidth, and the subsequent data transmission rate in the LTE advanced system may be further increased and even reach 1 Gbps.

The existing network resources are gradually overwhelmed with inflatable growth of UE data business volume. Particularly, as new-generation communication technologies (such as Third-Generation (3G) and LTE) are not widely distributed, user requirements on rate and flow may not be met, and user experience is worse. It is a problem that an operator has to consider how to prevent and change the situation. On one hand, popularization and network deployment of a new technology need to be speeded up, and on the other hand, it is hoped to quickly improve the network performance by enhancing the existing networks and existing technologies. It is well known that besides the wireless network technologies supplied by the 3rd Generation Partnership Project (3GPP), a Wireless Local Area Network (WLAN) generally applied at present, particularly the WLAN based on an IEEE802.11 standard, has been widely applied to hotspot access coverage in families, enterprises and even Internet, wherein technical specifications provided by a Wi-Fi Alliance are most widely applied, so that a WIFI network is actually equal to the WLAN network based on the IEEE802.11 standard. Under a condition of no confusion, a WIFI component is also adopted to describe WLAN-supporting wireless transmitting and receiving and processing components in a network node in a later article.

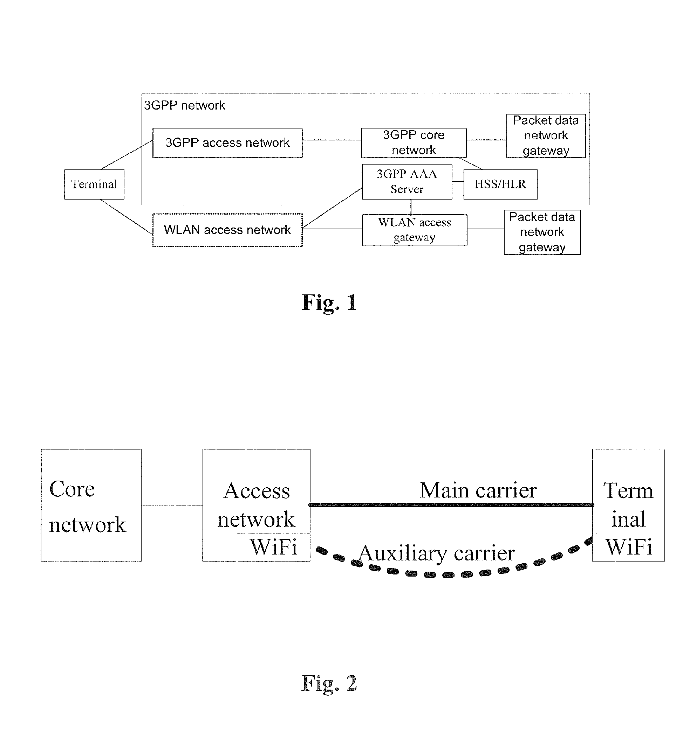

Under this premise, some operators and companies have put up an idea that the WLAN may be combined with an existing 3GPP access network to realize union transmission, so as to fulfill aims of offloading the existing 3GPP access network and improving the network performance by using the WLAN network. Nowadays, the 3GPP has made relevant protocols for interworking between the 3GPP access network and the WLAN network. Fig. 1 is a diagram of a framework of a network interworking protocol according to a relevant art. As shown in Fig. 1, an Interworking WLAN framework of the 3GPP allows that the WLAN network implements uniform authentication and authorization through an Authentication Authorization Accounting (AAA) server in the 3GPP access network at present, and a packet data network gateway in the existing 3GPP access network can be multiplexed to be a packet data gateway of the WLAN network, meanwhile, uniform accounting, billing and the like of the two networks may be realized, and loose coupling of the two networks is achieved. However, the conventional Interworking framework still has some shortcomings, for example, the conventional Interworking is triggered by the UE, and the network side does not have an active option to a target network and loses control power to a UE access network, so that the operator may not possibly guide a user to access the desired or optimal target network of the operator. Furthermore, the UE does not know whether the network side, such as the 3GPP access network and the WLAN, supports the interworking, thus the UE may possibly select the target network which may not realize interworking with the current network.

Meanwhile, the present network interworking has other shortcomings, for example, data streams are switched in lower speed when the UE moves between the 3GPP network and the WLAN network, and under this condition, the load is higher as the data streams of the two networks are required to pass through network elements of the 3GPP core network. Furthermore, it is important that the current framework still depends on a fact that the operator should have the independent 3GPP access network and the independent and intact WLAN network, and this requires that the operator operates and maintains multiple networks at the same time and that the Capital Expenditure is higher.

Therefore, relevant manufacturers provide a network combination scheme similar to carrier combination, and a general framework of the scheme is shown in Fig. 2. Fig. 2 is a diagram of the network combination scheme provided by the relevant manufacturer according to the relevant art. In Fig. 2, the WLAN only exists in serving as a data connection for transmission between the existing 3GPP access network and the UE instead of serving as the independent network any more. Main management on the UE by the access network and possible partial data transmission are implemented on the basis of the connection of the 3GPP access network, and this is similar to the carrier combination, that is to say, the connection of the 3GPP access network is used as a main carrier, and WLAN connection constructed by the access of the WIFI component on the UE is used as an auxiliary carrier, so as to realize stream division of the transmission on the main carrier; however, under the framework, the 3GPP and the WLAN are still two independent networks, so that the 3GPP access network may not know which WLAN network is to be subjected to stream division and whether the WLAN network is available in advance, and at the same time, the problems in the interworking are still not solved.

### Summary

An embodiment of the present invention provides a method and a device for accessing the network, so as to at least solve the problem that the 3GPP access network in the relevant art may not determine the WLAN to be subjected to stream division in advance.

The embodiment of the present invention provides the method for accessing the network, including: receiving, by a network element of the 3GPP access network, WLAN network information reported by UE; determining, by the network element of the 3GPP access network, a WLAN network to which the UE is allowed to access according to the WLAN network information; indicating, by the network element of the 3GPP access network, the UE to access the WLAN network.

Before the network element of the 3GPP access network receives the WLAN network information reported by the UE, the method further comprises : sending, by the network element of the 3GPP access network, report configuration information to the UE, wherein the report configuration information comprises at least one of the following: a reporting mode being periodic reporting or event triggering reporting and a reporting threshold for wireless signal quality.

Determining, by the network element of the 3GPP access network, the WLAN network to which the UE is allowed to access according to the WLAN network information comprises: detecting, by the network element of the 3GPP access network, whether the WLAN network information belongs to information that the WLAN network is allowed to access, wherein the information that the WLAN network is allowed to access is preconfigured by an operator, and if the WLAN network information belongs to the information that the WLAN network is allowed to access, determining, by the network element of the 3GPP access network that the UE is allowed to access the WLAN network.

Indicating, by the network element of the 3GPP access network, the UE to access the WLAN network comprises at least one of the following: sending, by the network element of the 3GPP access network, indicating information to the UE, wherein the indicating information is used for indicating whether the UE is allowed to access the WLAN network; sending, by the network element of the 3GPP access network, identification information allowing the UE to access the WLAN network to the UE, wherein the identification information comprises at least one of the following: a Basic Service Set Identifier (BSSID), a Service Set Identifier (SSID), an Extended Service Set Identifier (ESSID) and medium access control address information of an access point.

After the network element of the 3GPP access network indicates the UE to access the WLAN network, the method further comprises: determining, by the UE, whether to access the WLAN network.

The network element of the 3GPP access network comprises one of the following: an Evolved NodeB (eNB) in the LTE network, a Radio Network Controller (RNC) in a Universal Mobile Telecommunications System (UMTS) network, a node B in the UMTS network, and a Base Station Controller (BSC) and a Base Transceiver Station (BTS) in a Global System for Mobile Communications (GSM) network.

The WLAN network information comprises at least one of the following: the BSSID, the SSID, the ESSID, channel information, the medium access control address information of the access point, the wireless signal quality information and information indicating received signal intensity.

The embodiment of the present invention provides a device for accessing the network. The device is applied to a network element of the 3GPP access network and includes a receiving component configured to receive the WLAN network information reported by the UE, a determining component configured to determine a WLAN network to which the UE is allowed to access according to the WLAN network information, and an indicating component configured to indicate the UE to access the WLAN network.

The device further comprises: a sending component configured to send the report configuration information to the UE, wherein the report configuration information comprises at least one of the following: a reporting mode being periodic reporting or event triggering reporting and a reporting threshold for wireless signal quality.

The indicating component comprises: a first sending sub component configured to send the indicating information to the UE, wherein the indicating information is used for indicating whether the UE is allowed to access the WLAN network; a second sending sub component configured to send the identification information that allows the UE to access the WLAN network to the UE, wherein the identification information comprises at least one of the following: the BSSID, the SSID, the ESSID and the medium access control address information of the access point.

In the embodiment of the present invention, the network element in the 3GPP network determines the WLAN to which the UE is allowed to access according to the WLAN network information reported by the UE, and indicates the UE to access the WLAN network, thereby ensuring that the UE implements stream division by accessing the proper WLAN network, and enhancing the user experience.

### Brief Description of the Drawings

The figures here are used for further understanding the present invention, and constitute a part of the present invention. The schematic embodiments and specifications thereof of the present invention are configured to explain the present invention, and may not improperly limit the present invention, wherein:
Fig. 1 is a schematic diagram of a framework of the network interworking protocol according to the relevant art;
Fig. 2 is a schematic diagram of a network combination scheme of the relevant manufacture according to the relevant art;
Fig. 3 is a flowchart of a method for accessing a network according to an embodiment of the present invention;
Fig. 4 is an interaction flowchart of a method for accessing a network according to a preferred embodiment I of the present invention;
Fig. 5 is an interaction flowchart of a method for accessing a network according to a preferred embodiment II of the present invention;
Fig. 6 is an interaction flowchart of a method for accessing a network according to a preferred embodiment III of the present invention;
Fig. 7 is an interaction flowchart of a method for accessing a network according to a preferred embodiment IV of the present invention;
Fig. 8 is a structural block diagram of a device for accessing a network according to an embodiment of the present invention;
Fig. 9 is a structural block diagram I of a device for accessing a network according to a preferred embodiment of the present invention;
Fig. 10 is a structural block diagram II of a device for accessing the network according to the preferred embodiment of the present invention.

### Detailed Description of the Embodiments

The following is the detailed description of the present invention by referring to the figures and combining the embodiments. It is important to note that the embodiments of the present invention and characteristics in the embodiments may be combined under a condition of no conflict.

A method for accessing a network in the following embodiment may be applied to a server, and the server may be specifically configured to access a network; the method may be certainly applied to a group of servers or may be used as a component in the server and shared by the servers executing other functions.

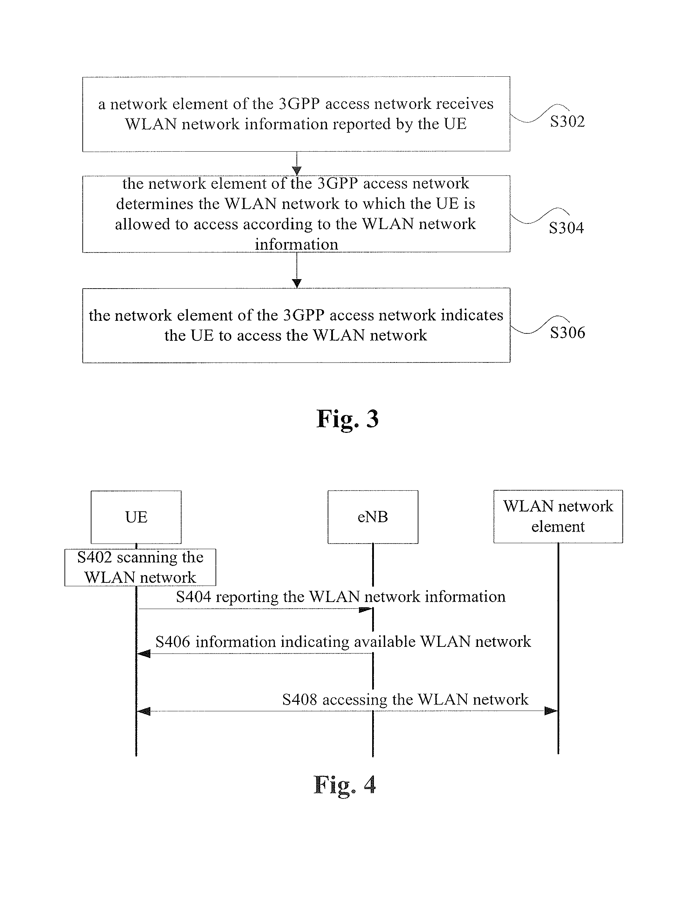

An embodiment of the present invention provides a method for accessing a network. Fig. 3 is a flowchart of a method for accessing a network according to an embodiment of the present invention. As shown in Fig. 3, the method comprises the following steps from S302 to S306.

S302: a network element of the 3GPP access network receives WLAN network information reported by the UE.

S304: the network element of the 3GPP access network determines the WLAN network to which the UE is allowed to access according to the WLAN network information.

S306: the network element of the 3GPP access network indicates the UE to access the WLAN network.

In the relevant art, the 3GPP access network may not determine the WLAN network to be subjected to stream division in advance. According to the embodiment of the present invention, the network element of the 3GPP access network determines the WLAN network to which the UE is allowed to access according to the WLAN network information reported by the UE and indicates the UE to access the WLAN network, thereby ensuring that the UE implements stream division by accessing the proper WLAN network, and enhancing the user experience.

Therefore, on the basis of the steps from S302 to S306, the present invention further improves part of the steps, so as to better enhance the user experience.

Improvement I: report configuration indication is added.

Before the network element of the 3GPP access network receives the WLAN network information reported by the UE, the network element of the 3GPP access network may send the report configuration information, wherein the report configuration information comprises at least one of the following: the reporting mode being periodic reporting or event triggering reporting and the reporting threshold for wireless signal quality, thus guaranteeing the accuracy of reporting of the WLAN network information.

Improvement II: the indication mode is expanded.
(1) the network element of the 3GPP access network may indicate the UE to access the WLAN network by sending the indicating information to the UE, wherein the indicating information is used for indicating whether the UE is allowed to access the WLAN network;
(2) the network element of the 3GPP access network sends the identification information allowing the UE to access the WLAN network to the UE, wherein the identification information comprises at least one of the following: the BSSID, the SSID, the ESSID and the medium access control address information of the access point. Preferably, the identification information of the WLAN network is defaulted under a condition that the network element of the 3GPP access network and the UE may both determine the WLAN network.

Improvement III: the UE determines whether to access the WLAN network by itself, thereby enhancing the active option of the UE.

It is noted that the network element of the 3GPP access network may be an eNB, a RNC in the UMTS network, a node B in the UMTS network, or a BSC and a BTS in the GSM network. Furthermore, the WLAN network information is pre-scanned or searched by the UE and may include a Basic Service Set Identifier (BSSID), a Service Set Identifier (SSID), an Extended Service Set Identifier (ESSID), Channel Information (Channel), the Medium Access Control (MAC) address information of the access point, wireless signal quality information, Received Signal Strength Indicator (RSSI) and the like.

The present invention is further illustrated according to different embodiments as follows.

The preferred embodiment I

According to the preferred embodiment I, the network element of the 3GPP access network comprises the eNB, and the UE is a multi-mode mobile phone at least supporting the LTE and the WLAN.

Fig. 4 is an interaction flowchart of a method for accessing a network according to a preferred embodiment I of the present invention, and as shown in the Fig. 4, the method comprises the following steps S402 to S408.

S402, the UE is in a connected state in the LTE network. The UE find the WLAN network by scanning, and acquires the identifier BSSID1 of the WLAN network by reading a signal identifier.

S404, the UE sends the WLAN network information acquired by the UE to the eNB through an uplink message such as a measurement report message, wherein the message comprises the BSSID1 of the WLAN network.

S406, the eNB detects whether the UE is allowed to access the WLAN network after receiving the message, wherein the method for detecting is to determine whether the reported WLAN network information belongs to a network which is pre-configured by the operator to allow the UE to access. If the UE is allowed to access the WLAN network, the eNB indicates the UE to access the WLAN network through a downlink message such as a RRC reconfiguration message or other newly added messages, wherein the downlink message carries the identification information of the available WLAN network.

S408, after receiving the downlink message, the UE accesses the corresponding WLAN network according to the indication.

In S408, the UE may access the WLAN network immediately or access the WLAN network later after receiving the downlink message.

Optionally, in S406, the eNB and the UE may both determine the current WLAN network, so that the downlink message transmitted by the eNB may only carry an access indication for indicating the UE to access the WLAN.

The preferred embodiment II

According to the preferred embodiment II, the network element of the 3GPP access network comprises the RNC and NodeB (called RNS together), and the UE is the multi-mode mobile phone at least supporting the UMTS network and the WLAN.

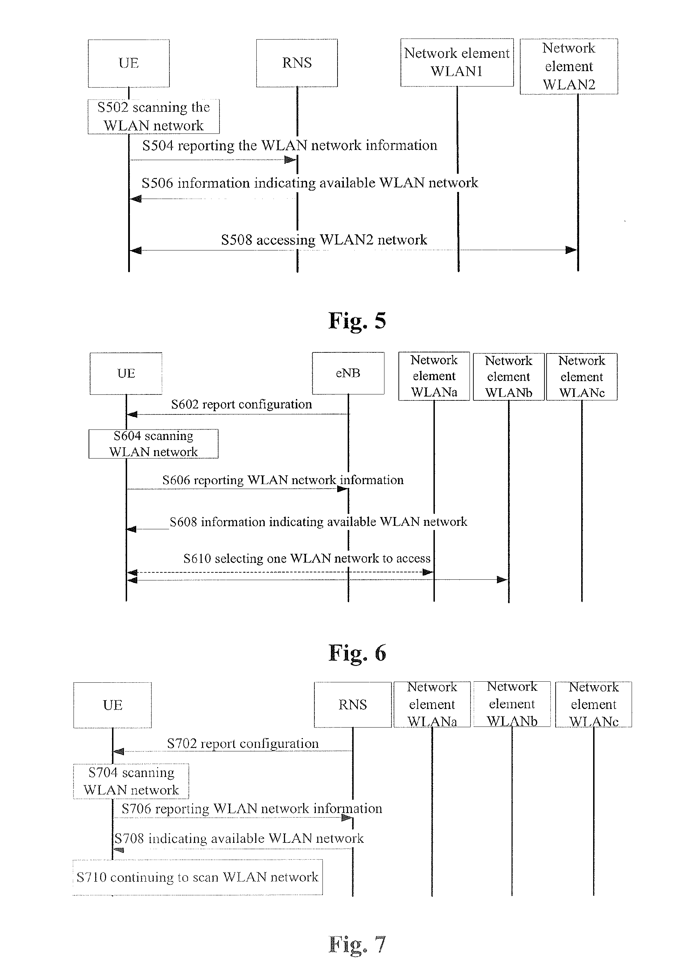

Fig. 5 is an interaction flowchart of a method for accessing the network according to a preferred embodiment II of the present invention, and as shown in the Fig. 5, the method comprises the following steps from S502 to S508.

S502: the UE is in a connected state in the UMTS network. The UE finds a plurality of WLAN networks by scanning, and acquires respectively the identifiers SSID1 and SSID2 of the WLAN networks by reading signal identifiers.

S504, the UE reports the WLAN network information such as the SSID1 and the SSID2 to the RNC through an uplink message such as a Cell Update (CU) message or other uplink messages.

S506, the RNC detects whether the UE is allowed to access the SSID1 and the SSID2, wherein the method for detecting is implemented according to RNC pre-configuration information or other algorithm information and the like. If detecting that the UE is allowed to access the WLAN network SSID2, the RNC indicates the available WLAN network information through a downlink message such as a Cell Update Confirm (CUC) or other messages, wherein the downlink message carries the available WLAN network identifier SSID3.

S508, after receiving the downlink message, the UE accesses the WLAN network with the identifier SSID2 according to the indicating information.

In S508, the UE may access the WLAN network immediately or access the WLAN network later after receiving the downlink message.

The preferred embodiment III

In a preferred embodiment III, a network element of the 3GPP access network comprises an eNB which is a network element of an LTE access network, and the UE is a multi-mode mobile phone at least supporting the LTE and the WLAN.

Fig. 6 is an interaction flowchart of a method for accessing the network according to a preferred embodiment III of the present invention, and as shown in the Fig. 6, the method comprises the following steps S602 to S610.

S602: the eNB issues the WLAN report configuration to the UE through a downlink message such as an RRC connection reconfiguration message, wherein the message comprises that the method for reporting, by the UE, the WLAN network information is periodic report, preferably, the eNB may configure a reporting threshold T1 for WLAN network wireless signal quality (such as received signal power) to the UE.

S604, the UE finds a plurality of WLAN networks SSIDa, SSIDb, SSIDc and SSIDd by scanning. Preferably, the UE detects whether the wireless signal quality Qa, Qb, Qc or Qd of each network is higher than the reporting threshold T1, for example, Qa, Qb and Qc are higher than the reporting threshold T1.

S606, the UE reports the WLAN network information to the eNB through an uplink message such as a measurement report message after receiving the report configuration, wherein the WLAN network information carries the network identifiers SSIDa, SSIDb and SSIDc, and their own wireless signal quality Qa, Qb and Qc.

S608, the eNB detects whether the UE may access the WLAN network reported, wherein the eNB may detect whether the UE may access the WLAN network reported according to the network wireless signal quality or through detecting whether the target WLAN network and the local network belong to the same operator. If the Qa and Qb meet an access standard on the network side, the eNB indicates the UE to access the WLAN network through the downlink message such as the RRC connection reconfiguration message, wherein the downlink message carries the available WLAN network identifier SSIDa and SSIDb.

S610, after receiving the downlink message, the UE accesses any WLAN network corresponding to the SSIDa and the SSIDb.

The preferred embodiment IV

In a preferred embodiment IV, a network element of the 3GPP access network is a Radio Network Subsystem (RNS) of the UMTS access network, and the UE is a multi-mode mobile phone at least supporting the UMTS and the WLAN.

Fig. 7 is an interaction flowchart of a method for accessing the network according to a preferred embodiment IV of the present invention, and as shown in the Fig. 7, the method comprises the following steps S702 to S710.

S702, the RNC sends WLAN report configuration information to the UE through a downlink message such as a measurement configuration message, wherein the downlink message comprises that the reporting mode is the event triggering reporting, and the reporting threshold value is T2.

S704, the UE finds the WLAN networks BSSIDa and BSSIDb by scaning, wherein the corresponding wireless signal quality RSSIa is greater than T2, and the RSSIb is smaller than T2.

S706, the UE reports the WLAN network information BSSIDa to the RNC through an uplink message such as a measurement report message or other uplink messages.

S708, the RNC detects that the UE may not access the BSSIDa and the BSSIDb, wherein the method for detecting is implemented according to the RNC pre-configuration information or according to other algorithm information. The RNC sends the downlink message to the UE, such as the newly added message, wherein the downlink message indicates that the UE may not access the WLAN networks corresponding to the BSSIDa and the BSSIDb.

S710, after receiving the downlink message, the UE does not access the networks WLANa and WLANb according to the indicating information. The UE continues to scan other WLAN networks. If other WLAN networks may be scanned, re-perform the steps from S704 to S708.

It is important that the steps shown in the flowcharts of the figures may be executed in computer systems, capable of executing instructions, of a group of computers, furthermore, although a logic sequence is listed in the flowcharts, the shown or described steps may be executed according to a sequence different from the logic sequence under certain circumferences.

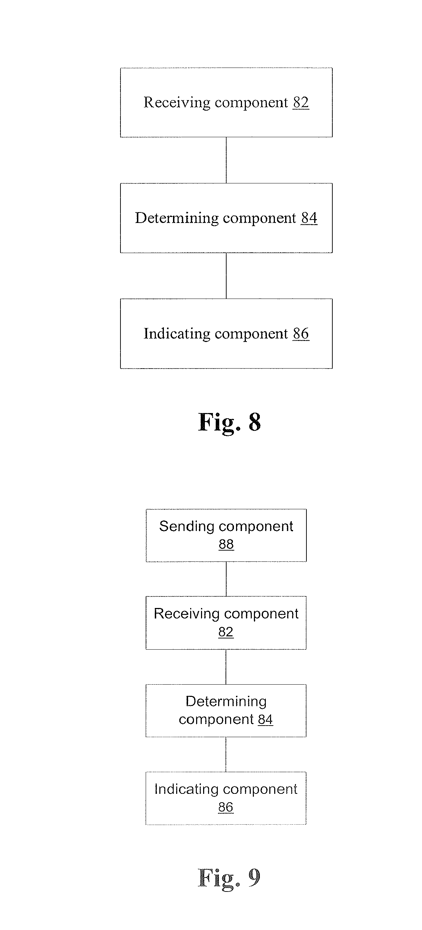

An embodiment of the present invention provides a device for accessing the network. The device for accessing the network may be applied to the network element of the 3GPP access network and configured to implement the method for accessing the network. Fig. 8 is a structural block diagram of a device for accessing a network, including a receiving component 82, a determining component 84 and an indicating component 86, and the structures of the components are described in detail as follows.

The receiving component 82 is configured to receive the WLAN network information reported by the UE; the determining component 84 is connected to the receiving component 82 and is configured to be determine a WLAN network to which the UE is allowed to access according to the WLAN network information received by the receiving component 82; the indicating component 86 is connected to the determining component 84 and is configured to indicate the UE to access the WLAN network.

Fig. 9 is a structural block diagram I of a device for accessing a network according to a preferred embodiment of the present invention; as shown in the Fig. 9, the device further comprises a sending component 88, configured to send the report configuration information to the UE, wherein the report configuration information comprises at least one of the following: the reporting mode being periodic reporting or event triggering reporting, and a reporting threshold for the wireless signal quality.

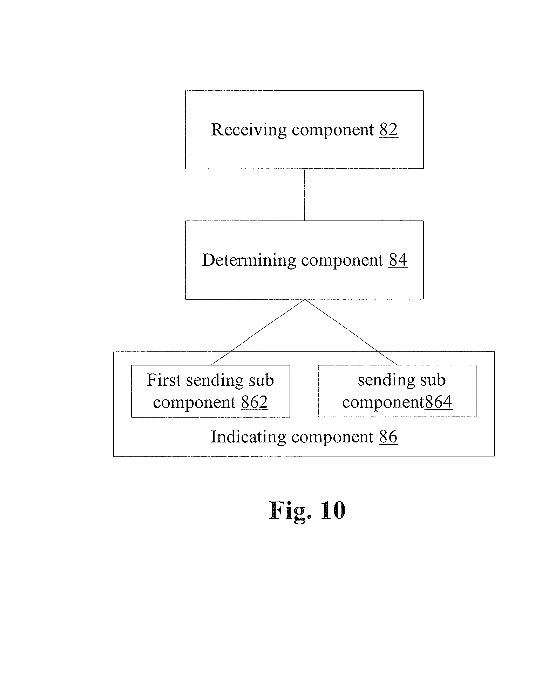

Fig. 10 is a structural block diagram II of a device for accessing a network according to a preferred embodiment of the present invention; as shown in the Fig. 10, the indicating component 86 comprises a first sending sub component 862 and a second sending sub component 864, and the structures of the sub components are described in detail as follows.

The first sending sub component 862 is configured to send the indicating information to the UE, wherein the indicating information is used for indicating whether the UE is allowed to access the WLAN network; the second sending sub component 864 is configured to send the identification information that allows the UE to access the WLAN network to the UE, wherein the identification information comprises at least one of the following: the BSSID, the SSID, the ESSID and the medium access control address information of the access point.

It is noted that the device for accessing the network disclosed by the embodiment corresponds to the method embodiment, and a specific realizing process of the device is illustrated in detail in the method embodiment, so unnecessary details of the process are avoided.

Above all, the embodiment of the present invention provides the method and the device for accessing the network. According to the embodiment of the present invention, the network element of the 3GPP access network determines the WLAN network to which the UE is allowed to access according to the WLAN network information reported by the UE and indicates the UE to access the WLAN network, thereby ensuring that the UE implements stream division by accessing the proper WLAN network, and enhancing the user experience.

Apparently, the skilled person in the art should understand that all the components or all the steps of the present invention may be implemented by a general calculation device, and they may be concentrated on the single calculation device or distributed on a network consisting of a plurality of calculation device; preferably, the components or the steps may be realized by program codes executed by the calculation device so as to be stored in a storage device and executed by the calculation device, or the components or the steps are respectively manufactured into all integrated circuit components, or multiple components or multiple steps are manufactured into single integrated circuit components so as to be implemented. Thus, the present invention is not limited in any specific hardware and software combination.

The above are only the preferred embodiments of the present invention, and are not intended to limit the present invention. For those skilled in this field, the present invention may have various modifications and changes. Any modification, equivalent replacement, improvement and the like all executed within the spirits and principles of the present invention should be included in the scope of protection of the present invention.

## Claims

1. A method for accessing network, **characterized by** comprising:
receiving, by a network element of a 3rd Generation Partnership Project (3GPP) access network, Wireless Local Area Network (WLAN) network information reported by User Equipment (UE);
determining, by the network element of the 3GPP access network, a WLAN network to which the UE is allowed to access according to the WLAN network information;
indicating, by the network element of the 3GPP access network, the UE to access the WLAN network.

2. The method according to claim 1, **characterized in that** before the network element of the 3GPP access network receives the WLAN network information reported by the UE, the method further comprises: sending, by the network element of the 3GPP access network, report configuration information to the UE, wherein the report configuration information comprises at least one of the following: a reporting mode being periodic reporting or event triggering reporting and a reporting threshold for wireless signal quality.

3. The method according to claim 1, **characterized in that** determining, by the network element of the 3GPP access network, the WLAN network to which the UE is allowed to access according to the WLAN network information comprises:
detecting, by the network element of the 3GPP access network, whether the WLAN network information belongs to information that the WLAN network is allowed to access, wherein the information that the WLAN network is allowed to access is preconfigured by an operator; and
if the WLAN network information belongs to the information that the WLAN network is allowed to access, determining, by the network element of the 3GPP access network, that the UE is allowed to access the WLAN network.

4. The method according to claim 1, **characterized in that** indicating, by the network element of the 3GPP access network, the UE to access the WLAN network comprises at least one of the following:
sending, by the network element of the 3GPP access network, indicating information to the UE, wherein the indicating information is used for indicating whether the UE is allowed to access the WLAN network;
sending, by the network element of the 3GPP access network, identification information allowing the UE to access the WLAN network to the UE, wherein the identification information comprises at least one of the following: a Basic Service Set Identifier (BSSID), a Service Set Identifier (SSID), an Extended Service Set Identifier (ESSID) and medium access control address information of an access point.

5. The method according to any one of claims 1 to 4, **characterized in that** after the network element of the 3GPP access network indicates the UE to access the WLAN network, the method further comprises: determining, by the UE, whether to access the WLAN network.

6. The method according to any one of claims 1 to 4, **characterized in that** the network element of the 3GPP access network comprises one of the following: an Evolved NodeB (eNB) in the LTE network, a Radio Network Controller (RNC) in a Universal Mobile Telecommunications System (UMTS) network, a node B in the UMTS network, and a Base Station Controller (BSC) and a Base Transceiver Station (BTS) in a Global System for Mobile Communications (GSM) network.

7. The method according to any one of claims 1 to 4, **characterized in that** the WLAN network information comprises at least one of the following: the BSSID, the SSID, the ESSID, channel information, the medium access control address information of the access point, the wireless signal quality information and information indicating received signal intensity.

8. A device for accessing a network, applied to a network element of a 3rd Generation Partnership Project (3GPP) access network, **characterized by** comprising:
a receiving component configured to receive Wireless Local Area Network (WLAN) network information reported by User Equipment (UE);
a determining component configured to determine a WLAN network to which the UE is allowed to access according to the WLAN network information;
an indicating component configured to indicate the UE to access the WLAN network.

9. The device according to claim 8, **characterized by** further comprising: a sending component configured to send the report configuration information to the UE, wherein the report configuration information comprises at least one of the following: a reporting mode being periodic reporting or event triggering reporting and a reporting threshold for wireless signal quality.

10. The device according to claim 8, **characterized in that** the indicating component comprises:
a first sending sub component configured to send the indicating information to the UE, wherein the indicating information is used for indicating whether the UE is allowed to access the WLAN network;
a second sending sub component configured to send the identification information allowing the UE to access the WLAN network to the UE, wherein the identification information comprises at least one of the following: a Basic Service Set Identifier (BSSI), a Service Set Identifier (SSI), an Extended Service Set Identifier (ESSID) and medium access control address information of an access point.
